# EUROPEAN PATENT SPECIFICATION

(11) **EP 2 165 692 B1**
(45) Date of publication and mention of the grant of the patent: **11.03.2020**
(21) Application number: 08703837.8
(22) Date of filing: 16.01.2008
(51) Int. Cl.: A61K 6/00, A01N 59/16, A61C 13/00, A61F 2/28, A61F 2/30, A61G 10/00, A61G 12/00, A61L 27/00, A61L 31/00, B01J 19/12, D06M 11/83

(54) **SILVER ION FIXED PRODUCT PRODUCED BY MICROWAVE IRRADIATION, AND METHOD FOR SILVER ION FIXATION**
DURCH MIKROWELLEN-BESTRAHLUNG HERGESTELLTES, AN SILBERIONEN FIXIERTES PRODUKT UND VERFAHREN ZUR SILBERIONENFIXIERUNG
PRODUIT AVEC ION ARGENT FIXÉ ENGENDRÉ PAR RAYONNEMENT MICRO-ONDE, ET PROCÉDÉ DE FIXATION D'ION ARGENT

(30) Priority: 05.06.2007 JP 2007149803
(43) Date of publication of application: 24.03.2010
(73) Proprietor: Pikapower. Co., Ltd., Hyogo 662-0015 (JP)
(72) Inventor: UKEGAWA, Satoru, Nishinomiya-shi Hyogo 662-0015 (JP)
(74) Representative: Horn Kleimann Waitzhofer Patentanwälte PartG mbB
(86) International application number: PCT/JP2008/051010
(87) International publication number: WO 2008/149568

(56) References cited:
- WO-A1-2005/030665
- WO-A1-2006/049479
- WO-A1-2006/058906
- JP-A- 9 313 591
- JP-A- H06 211 619
- JP-A- 2001 026 466
- JP-A- 2007 031 857
- JP-A- 2007 289 629
- US-A1- 2005 123 621
- GAN Q: "A case study of microwave processing of metal hydroxide sediment sludge from printed circuit board manufacturing wash water", WASTE MANAGEMENT, ELSEVIER, NEW YORK, NY, US, vol. 20, no. 8, 1 December 2000 (2000-12-01), pages 695-701, XP004216893, ISSN: 0956-053X, DOI: 10.1016/S0956-053X(00)00036-2
- YUTAKA HIBINO ET AL.: 'Koreika Shakai to Ceramics (3) Gin Ion ni yoru Shikayo Zairyo no Kokinsei Fuyo Gijutsu' F INE C ERAM. REPORT vol. 18, no. 4, 2000, pages 74 - 78
- HIROSHI YOSHIKAWA ET AL.: 'Ag+ (Gin) Ion ni yoru Kokin Boshu Coat Gijutsu' SHARP TECHNICAL JOURNAL vol. 86, 2000, pages 16 - 20
- RAMESHBABU N ET AL.: 'Antibacterial nanosized silver substituted hydroxyapatite: Synthesis and characterization' J BIOMED MATER RES PT A vol. 80, no. 3, pages 581 - 591, XP008126264
- HONDA KAZUHIRO ET AL.: 'Formation of Ag Aggregate on Glass Substrates using the Microwave Induction Heating' TRANS.MATER.RES.SOC.JPN vol. 31, no. 2, 2006, pages 303 - 306

## Description

### Technical Field

The present invention relates to a process for manufacturing a silver-ion coated object by coating silver-ion onto a target object. Various objects can be a target object. For example, a silver-ion coated object such as a restoration object for body deficiency, a dental artificial restoration object, an artificial joint, an artificial bone, an auxiliary material for bone regeneration, a medical apparatus, a body mount object, a hospital facility goods, a nursing care supplies, a baby goods, a toy, a household item, a machine, a tool and a container so on. The restoration object for body deficiency is a broad concept. For example, a denture, an artificial limb, an artificial arm, an artificial breast, a dental prosthesis and a maxillofacial prosthesis (a maxillary prosthesis, a splint, a craniofacial implant, an artificial eye, an artificial ear, an artificial nose, an artificial cheek) are included. The medical apparatus is a broad concept too. For example, a catheter, an endoscopy, a scalpel, a diagnostic apparatus, a contact lens, a glass and a hearing aid are included. The body mount object is a broad concept too. For example, sanitary goods, a mask, a mouthpiece, a mouth guard, underwear, a sandal, a sock, a cloth, a cap, a shoes, an insole, a bedding, an ornament and an accessory are included. The hospital facility goods is a broad concept too. For example, the facility goods such as a sickroom, a bed, a sheet, a pillow, a sandal, a toilet and a bath are included. The nursing care supplies is a broad concept too. For example, a toilet, a urinal, a diaper, a bed, bedding, a gauze, a towel, a wheel chair, a cane, a various assistant tool and apparatus are included. The container is a broad concept too. For example, a drinking water container, a food container, a cosmetic container, a medicine container and a supplement container are included. The machine and tool are a broad concept too. For example, a food processor machine, a electronic machine, a communication equipment, a handheld terminal equipment, a business equipment, a office use tool, a car interior and equipment, a train interior and equipment, an airplane fixture and equipment, a house fixture and equipment, a barber fixture and equipment, a cosmetic shop fixture and equipment (a scissor, a razor and so on), an elder care facility fixture and equipment and a nursing care facility fixture and equipment are included. The household item is a broad concept too. For example, an object used for a human body directly such as a tableware, a cooking implement (a kitchen knife, a chopping board and so on), a carpeting, a curtain, a mask, a whisk, a toothbrush, bath equipment and a writing tool are included.

### Background Art

A denture, an artificial limb, an artificial arm, an artificial finger, an artificial breast, a dental prosthesis and a maxillofacial prosthesis are used as a restoration object for restoring and repairing the body deficient portion. These objects are installed into the body deficient portion directly, and it is important for curing the hygiene problem. Hereinafter, the background art is explained by the denture case as an example.

As the denture structure, various structures such as the structure having the denture base, the artificial teeth fixed onto the denture base and the clasp, the structure having the denture base and the artificial teeth without the metal clasp, and the structure having the bridgework denture attached to the remaining teeth on the both sides are known.

When the denture is fixed insufficiently, the denture becomes unstable and sways, and the clenching problem will occur. In the conventional denture in the prior art, it is important for the denture to fix and maintain the stable state relative to the remaining teeth and the gum. The maintenance for the denture is required frequently even if the denture is a clasp type and a non clasp type.

The inventor Satoru Ukegawa has observed the status of a lot of dentures, orthodontics apparatus and mouth guards in practical use as a dental technologist for many years, and has noticed that most of them are in the insanitary condition having the smell and discolored stain due to the insufficiency of the cleaning. Such smell and discolored stain comes from the biofilm of denture plaque and so on, such pathogenicity of the biofilm has an influence on human health, and therefore the inventor Satoru Ukegawa has noticed that in near future, with the rapid increase of the aged people, the elderly requiring support, the elderly requiring long-term nursing care, the easy and the effective wash maintenance method for the denture will be required. In the present market, as the simple wash maintenance use, a lot of special wash medicines for the denture are sold.

Non patent prior art 1 : Page 2-3, Yoshihiko Okuno, "The plate denture work 2, partial plate denture" Ishiyaku Publishers,Inc, 5th March 1978.
Patent prior art 1 : Japanese patent application JPA 2005 - 272365
Patent prior art 2 : Japanese patent application JPA 2005 - 060695

WO 2005/030665 A1 discloses an article having a antimicrobial surface with a metal ion concentration, especially a Ag-concentration in a depth of about 0 um to about 2 um of the article measured from the surface higher than 0,6 wt%, preferably 0,8 weight-%, most preferably 1 weight-%.

US 2005/123621 A1 discloses a method of coating silver compounds on a substrate, the method comprising combining a sparingly soluble silver-containing compound with an ammonium-containing compound to form an aqueous solution, coating the solution on a substrate, and drying the coated substrate.

WO 2006/058906 A1 discloses prosthetic devices or implants, that can release in the implant site silver ions, thus providing an antibacterial and non-cytotoxic action, and a process to prepare them. The preparation process consists in the operation of subjecting the device, which is constituted by at least a surface layer or a part of a glass, ceramic or glass-ceramic material, containing metals' ions exchangeable with silver ions, to a silver ions containing aqueous solution ion-exchange process.

### Disclosure of Invention

### The problems to be solved

However, the conventional wash medicines for the denture disclosed in the patent prior art 1 contain bleach ingredient. When the wash medicine containing bleach ingredient such as the conventional wash medicines is used as the wash treatment for the object inserted to the vivo such as the denture, the operation for washing it carefully to wash the bleach ingredient away is required. In addition, when the wash medicine containing bleach ingredient such as the conventional wash medicines is used as the wash medicine for the object inserted in vivo such as the denture, the denture material can be deteriorated by the wash medicine. Especially, the chlorine type bleach will deteriorate the denture material.

When the material having antimicrobial properties and bactericidal capable such as the conventional bleach is used as the wash medicine for the object such as the denture which is inserted in vivo for a long period, such deterioration to cause the object to be unusable has not occurred, but at least, the object surface will be discolored. For the object such as the denture that is inserted in vivo for a long period, such discoloration becomes a big problem because of the damage to the appearance and esthetics.

There is another problem that the duration of the efficacy of the conventional wash medicines for the denture is short. The usage procedure of the conventional wash medicines for the denture is that the object is immersed in the solution of the conventional wash medicines, the stain remaining on the surface of the object will be removed, and the active ingredient is coated onto the surface of the object in order to sustain the duration of the efficacy. However, the coating onto the surface of the object is not always possible to carry out sufficiently due to the relationship between the status of the surface of the denture and the active ingredient.

In addition, in the conventional technology, the plasma ion coating method is known for the purpose of the improving the abrasion resistance and the scratch resistance of the surface of the object. The conventional plasma ion coating method is not known as the method for improving the antimicrobial properties, the stain-proof capable and the deodorant properties of the object. Even if the antimicrobial medicine simply is sprayed onto the surface of the object processed by the plasma ion coating method, the duration of the antimicrobial properties is not improved.

It is an object of the present invention to provide an effective method for the antimicrobial coating for improving the duration of the antimicrobial properties, the stain-proof capable and the deodorant properties of the object.

### Means for solving the problem

In the conventional technology, the concept for fixing the silver ion onto the target object by immersing the target object into the silver ion solution followed by irradiating microwave to the target object is not known as the processing for improving the antimicrobial properties of the target object. The present invention introduces a quite new concept for processing. The silver ion having excellent antimicrobial properties is known, however the method how to fixing the silver ion onto the surface of the object is not known and how to improve the duration of the antimicrobial properties is not known. The present invention successfully can provide the silver ion coated object having the excellent antimicrobial properties and duration by immersing the object into a silver ion solution followed by irradiating microwave to the object in the silver ion solution.

In the conventional technology, the concept for fixing the silver ion onto the target object by spraying a silver ion solution onto the object followed by irradiating microwave to the object with the sprayed silver ion solution is not known as the processing for improving the antimicrobial properties of the target object. The present invention introduces a quite new concept for processing. The silver ion having excellent antimicrobial properties is known, however the method how to fixing the silver ion onto the surface of the object is not known and how to improve the duration of the antimicrobial properties is not known. The present invention successfully can provide the silver ion coated object having the excellent antimicrobial properties and duration by spraying a silver ion solution onto the object followed by irradiating microwave to the object with the sprayed silver ion solution.

In the conventional technology, the plasma ion coating is known as the method for improving the abrasion resistance and the scratch resistance of the surface of the target object. The technology for processing the plasma ion coating to the object has been developed mainly for the industrial parts processing. Recently, a study for applying the plasma ion coating to the artificial joint and the denture for improving the abrasion resistance and the scratch resistance has been developed. However, it is known that the plasma ion coating processing does not improve the antimicrobial properties. Therefore, there is a problem of how to improve the antimicrobial properties when the plasma ion coating is applied to the artificial joint and the denture. The present invention successfully can provide the silver ion coated object having the excellent antimicrobial properties and duration by immersing the plasma ion coated object into the silver ion solution followed by irradiating microwave to the object in the silver ion solution.

As the method for improving the antimicrobial properties on the plasma ion coated object, the present invention successfully can provide the silver ion coated object having the excellent antimicrobial properties and duration by spraying a silver ion solution onto the plasma ion coated object followed by irradiating microwave to the object with the sprayed silver ion solution.

As the plasma ion coating, a titanium nitride coating (TiN), a diamond-like carbon coating (DLC), a chromium nitride coating (CrN), a charcoal titanium nitride coating (TiCN), a titanium carbide coating (TiC), a titanium nitride aluminum coating (TiAlN) are known.

This silver ion coated object can have the excellent antimicrobial properties and duration as well as the abrasion resistance and the scratch resistance because of coating the plasma ion coating onto the target object first, and then coating the silver ion coating.

The present invention can be applied to various objects. For example, the following objects can be targets.

For example, a restoration object for body deficiency can be a target. The restoration object is formed to the shape embedded into the body defective part such as a denture, an artificial limb, an artificial arm, an artificial breast, a dental prosthesis and a maxillofacial prosthesis (a maxillary prosthesis, a splint, a craniofacial implant, an artificial eye, an artificial ear, an artificial nose, an artificial cheek).

For example, an artificial joint, an artificial bone, an auxiliary material for bone regeneration can be targets.

For example, a medical apparatus can be a target. The medical apparatus is used in the medical care scene such as a catheter, an endoscopy, a scalpel, a diagnostic apparatus, other tools and apparatus required sterilization and antimicrobial such as a contact lens, a glass and a hearing aid (household items are included).

For example, a body mount object can be a target. The concept of the body mount object includes sanitary goods, a mask, a mouthpiece, a mouth guard, an underwear, a sandal, a sock, a cloth, a cap, a shoes, an insole, a bedding, an ornament and an accessory.

For example, hospital facility goods can be a target. The concept of the hospital facility goods includes a sickroom, a bed, a sheet, a pillow, a sandal, a toilet and a bath.

For example, nursing care supplies can be a target. The concept of the nursing care supplies includes a toilet, a urinal, a diaper, a bed, bedding, a gauze, a towel, a wheel chair, a cane, and various assistant tools and apparatus.

For example, baby goods can be a target. The concept of the baby goods includes various goods such as a feeding bottle.

For example, a toy can be a target. The toy should be processed for antimicrobial improvement because the toy can be bitten and licked.

For example, an object used for a human body can be a target. The concept of the object used for a human body includes tableware, a cooking implement (a kitchen knife, a chopping board and so on), carpeting, a curtain, a mask, a whisk, a toothbrush, bath equipment and a writing tool. However, the applicability of the present invention is not limited to the above goods.

For example, a container can be a target. The concept of the container includes a drinking water container, a food container, a cosmetic container, a container for the medicine, a health food container and so on.

For example, a machine and tool can be a target. The concept of the machine and tool includes a food processor machine, a electronic machine, a communication equipment, a handheld terminal equipment, a business equipment, a office use tool, a car interior and equipment, a train fixture and equipment, an airplane fixture and equipment, a house fixture and equipment, a barbershop fixture and equipment, a cosmetic shop fixture and equipment (a scissor, a razor and so on), an elder care facility fixture and equipment and a nursing care facility fixture and equipment.

In accordance with the present invention, a process for manufacturing a silver ion coated object having improved antimicrobial properties, comprises:
an irradiating process for irradiating microwaves to a target object immersed into a silver ion solution or to a target object in a sprayed state with a silver ion solution sprayed onto it, such that the silver ion solution is spread out onto the whole surface of the target object,
characterized in that the object stays immersed in or soaked with the silver ion solution during the microwave irradiation, and the object is dried after the microwave irradiation.

The irradiation time may be in the range between 10 seconds to 30 seconds.

Said object may be a plasma ion coated object coated by a plasma ion coating processing.

The silver ion solution is not limited to particular solution. For example, the silver ion / titanium oxide colloid aqueous solution can be used.

As shown above, according to the silver ion coated object, the excellent antimicrobial properties can be added to the target object for a long time.

As shown above, according to the silver ion coated object, the excellent antimicrobial properties in addition to the abrasion resistance and the scratch resistance can be provided for the surface of the target object for a long time.

### Brief Description of Drawings

Fig. 1 illustrates an outline of the first type of the present invention of the silver ion coating process of the present invention.
Fig. 2 illustrates an outline of the second type of the present invention of the silver ion coating process of the present invention.
Fig. 3 illustrates an outline of the third type of the present invention of the silver ion coating process of the present invention.
Fig. 4 illustrates an outline of the fourth type of the present invention of the silver ion coating process of the present invention.
Fig. 5 illustrates a result of the measurement of the silver ion particle size distribution measurement test of the silver ion solution.
Fig. 6 illustrates a result of the measurement of the silver ion particle size distribution measurement test of the silver ion / titanium oxide colloid aqueous solution.
Fig. 7 illustrates a result of the measurement of the evaluation 1 of the test on effect of the antimicrobial of the silver ion coated object of the first type of the present invention.
Fig. 8 illustrates a result of the measurement of the evaluation 2 of the test on effect of the antimicrobial of the silver ion coated object of the first type of the present invention.
Fig. 9 illustrates a result of the measurement of the evaluation 3 of the test on effect of the antimicrobial of the silver ion coated object of the first type of the present invention.
Fig. 10 illustrates a result of the measurement of the evaluation 4 of the test on effect of the antimicrobial of the silver ion coated object of the third type of the present invention.
Fig. 11 illustrates a plotted result of the measurement of the bending stress and the bending strain of the denture made from the acrylic resin material.
Fig. 12 illustrates a summary of the bending stress and the bending strain of the denture made from the acrylic resin material.
Fig. 13 illustrates a plotted result of the measurement of the bending stress and the bending strain of the denture made from the polycarbonate resin material.
Fig. 14 illustrates a summary of the bending stress and the bending strain of the denture made from the polycarbonate resin material.

### Best Mode for Carrying Out the Invention

Hereinafter, the example for carrying out the present invention will be described by way of embodiments. However, the present invention is not limited to the embodiments.

Hereinafter, a denture is picked out as an example of the silver ion coated object manufactured in accordance with the present invention. In addition, the silver ion coating process of the present invention is described. The denture is only one of many example objects. The present invention can be applied to various objects such as the restoration object for body deficiency (an artificial limb, an artificial arm, an artificial finger, an artificial breast, a dental prosthesis and a maxillofacial prosthesis (a maxillary prosthesis, a splint, a craniofacial implant, an artificial eye, an artificial ear, an artificial nose, an artificial cheek), an artificial joint, an artificial bone, an auxiliary material for bone regeneration, a medical apparatus (a catheter, an endoscopy, a scalpel, a diagnostic apparatus, a contact lens, a glass and a hearing aid), a body mount object (sanitary goods, a mask, a mouthpiece, a mouth guard, an underwear, a sandal, a sock, a cloth), hospital facility goods (the facility goods for which the antimicrobial processing is required such as a sickroom, a bed, a sheet, a pillow, a sandal, a toilet and a bath), a nursing care supplies (a toilet, an urinal, a diaper, a bed, a bedding, a gauze, a towel, a wheel chair, a cane, a various assistant tool and apparatus), a household item (an object used for a human body directly such as a sanitary goods, a mask, a whisk, a toothbrush, bath equipment and a writing tool), baby goods, toys and so on. As shown above, the silver ion coating processing of the present invention can be applied to various objects, it is not limited to the purpose.

### (Embodiment 1)

Fig. 1 illustrates an outline of the invention of the first type of the silver ion coating process of the present invention. In this embodiment, a denture is described as an example of the target object of the first silver ion coating process.

In the invention of the first type of the silver ion coating process of the present invention, first, the target object denture 3a before coating process is immersed into the container 2 filled with the silver ion solution 1. In this embodiment, Lunar-Silver™ of the Antimicrobial Technology Co., Ltd. is employed as the silver ion solution.

Next, the microwave is irradiated to the denture from the outside of the container 2. As described below, it is confirmed by the experiment that the silver ion coating process will be performed during the short period of the microwave irradiation about 10 seconds to 30 seconds.

Next, the denture 3a is removed from the container and dried, and the processed denture 4a is obtained.

Fig. 2 illustrates an outline of the invention of the second type of the silver ion coating process of the present invention. In this embodiment, a denture also is described as an example of the target object of the second silver ion coating process.

In the invention of the second type of the silver ion coating process of the present invention, first, the silver ion solution 1 is filled into a sprayer container 12, and the silver ion solution is sprayed onto the surface of the target object denture 3b before the coating process in order to spread out the silver ion solution onto the whole surface of the denture 3b equally. The particle size of the sprayer aerosol is not specifically limited. The silver solution is sprayed sufficiently.

Next, the microwave is irradiated to the denture 3b directly. As described below, it is confirmed by the experiment that the silver ion coating process will be performed during the short period of the microwave irradiation of about 10 seconds to 30 seconds.

Next, the denture 3a is dried, and the processed denture 4b is obtained.

Fig. 3 illustrates an outline of the third type of the present invention of the silver ion coating process of the present invention. In this embodiment, a denture also is described as an example of the target object of the second silver ion coating process.

In the third type of the present invention of the silver ion coating process of the present invention, first, the predetermined plasma ion coating is processed onto the surface of the target object denture 3c. As the plasma ion coating, various types can be applied such as titanium nitride coating (TiN), diamond-like carbon coating (DLC), chromium nitride coating (CrN), charcoal titanium nitride coating (TiCN), titanium carbide coating (TiC), and the titanium nitride aluminum coating (TiAlN). In this embodiment, DLC is applied as the plasma ion coating.

In this manner, the plasma ion coating onto the surface of the target object can improve the abrasion resistance and the scratch resistance of the surface of the target object.

Next, the target object denture 3c' after plasma ion coating process is immersed into the container 2 filled with the silver ion solution 1.

Next, the microwave is irradiated to the denture from the outside of the container 2. As described below, it is confirmed by the experiment that the silver ion coating process will be performed during the short period of the microwave irradiation of about 10 seconds to 30 seconds.

Next, the denture is removed from the container and dried, and the processed denture 4c is obtained.

Fig. 4 illustrates an outline of the fourth type of the present invention of the silver ion coating process of the present invention. In this embodiment, a denture also is described as an example of the target object of the fourth type of the present invention of the silver ion coating process.

In the fourth type of the present invention of the silver ion coating process of the present invention, first, the predetermined plasma ion coating is processed onto the surface of the target object denture 3d. In this embodiment, DLC is applied as the plasma ion coating.

In the fourth type of the present invention of the silver ion coating process of the present invention, first, the silver ion solution is sprayed onto the surface of the target object denture 3d' after plasma ion coating process in order to spread out the silver ion solution onto the whole surface of the denture 3d' equally.

Next, the microwave is irradiated to the denture 3d' directly. As described below, it is confirmed by the experiment that the silver ion coating process will be performed during the short period of the microwave irradiation about of 10 seconds to 30 seconds.

Next, the denture is dried, and the processed denture 4d is obtained.

The experimental manufacture of the denture 4 by the above-mentioned process and various evaluations has been conducted.

First, the silver ion solution used for manufacturing the experimental production is described.

Any silver ion solution which contains silver ion can be applied. For example, one of the silver solutions is the mixing solution of (A) the mixing solution of an organic solvent and a nonionic surfactant, (B) the inorganic oxide colloidal solution having distributed silver ion colloidal particles and (C) water. The component of the silver ion density may be in the range between 0.000014 wt% to 0.2 wt%, preferably, in the range between 0.000014 wt% to 0.01 wt% in equivalent oxide density.

The particle diameter of silver ion in the silver ion solution used for the experimental production process is important. As the experiment 1, a silver ion particle size distribution measurement of the silver ion solution is conducted.

Another silver solution is the mixing solution of (A) the mixing solution of an organic solvent and a nonionic surfactant, (B) the inorganic oxide colloidal solution (the silver ion / titanium oxide colloidal solution) having distributed colloidal particle including the oxide where the silver is supported (the titanium oxide so on) and (C) water. The component of the silver ion density may be in the range between 0.000014 wt% to 0.2 wt%, preferably, in the range between 0.000014 wt% to 0.01 wt% in equivalent oxide density.

In the same manner, as the experiment 2, a silver ion particle size distribution measurement of the silver ion / titanium oxide colloidal solution is conducted.

### (Experiment 1)

### A silver ion particle size distribution measurement of the silver ion solution

In order to secure the objectivity of the test, the test is conducted by the Technology Research Institute of Osaka Prefecture (test no.02-02603). The particle size distribution or the zeta potential of the silver ion solution is measured. The particle size distribution is measured by the dynamic light scattering type measuring machine of the broadband particle size distribution measuring apparatus (the dynamic light scattering type particle size distribution measuring machine LB 550 made by HORIBA, Ltd.). Test sample solution is not diluted, and the original undiluted solution is used for the measurement. The measuring range is between 1nm to 6 µm. The result of the measurement is shown in Fig.5. The silver value is used as the refraction ratio and the volume is used as the particle diameter scale in the measurement result of the particle size distribution. As the result of the measurement, the median diameter of the silver ion was 39.7(nm).

### (Experiment 2)

### A silver ion particle size distribution measurement of the silver ion / titanium oxide colloidal solution

In order to secure the objectivity of the test, the test is conducted by the Technology Research Institute of Osaka Prefecture (test no.02-02855).

The same as experiment 1, the particle size distribution or the zeta potential of the silver ion solution is measured. The particle size distribution is measured by the dynamic light scattering type measuring machine of the broadband particle size distribution measuring apparatus (the dynamic light scattering type particle size distribution measuring machine LB 550 made by HORIBA, Ltd.). Test sample solution is not diluted, and the original undiluted solution is used for the measurement. The measuring range is between 1nm to 6 µm. The result of the measurement is shown in Fig.6. The titanium oxide (the rutile form) value is used as the refraction ratio and the volume is used as the particle diameter scale in the measurement result of the particle size distribution. As the result of the measurement, the median diameter of the silver ion was 49.5(nm).

Next, the experimental production of the denture 4 is conducted by using the above-mentioned silver ion solution, and various evaluations have been conducted.

### (Evaluation 1)

### The test on the effect of the antimicrobial of the silver ion coated object of the first type manufactured in accordance with the present invention.

The evaluation 1 is the experiment showing the effect of the antimicrobial of the silver ion coated object of the first type manufactured in accordance with the present invention. The silver ion coated object of the first type manufactured in accordance with the present invention is manufactured by coating the silver ion by irradiating the microwave to the target object immersed in the silver ion solution.

In order to secure the objectivity of the test, the test is conducted by the Technology Research Institute of Osaka Prefecture (test no.02-00165).

The antimicrobial property of the silver ion coated object is verified by the experiment of the mold evaluation by using the candida albicans. The candida albicans is regarded as one of the main microorganisms causing aggravation in the condition of the denture such as the paradentosis and the denture candidiasis. From his professional experience, the inventor Ukegawa who is a professional dental technician considers that the experiment of the mold evaluation by using the candida albicans is important for verifying the antimicrobial properties and bactericide capable of the restoration object for body deficiency and the inventor Ukegawa conducted the experiment of the mold evaluation by using the candida albicans.

In order to secure the objectivity of the test, the test is conducted by the Technology Research Institute of Osaka Prefecture.

### (Test method of the evaluation 1)

The polypropylene film A of a inoculums just after inoculating the candida albicans as the controlled trial, the polypropylene film B of a inoculums 24 hours after inoculating the candida albicans, the acrylic resin C for the dental plate which the silver ion coating is not processed but waterproof processing has been processed, the denture D (denture 4a) of the first type manufactured in accordance with the present invention for which the silver ion coating processing has been done (microwave irradiation time 10 seconds), the denture E (denture 4a) of the first type manufactured in accordance with the present invention for which the silver ion coating processing has been done (microwave irradiation time 20 seconds), the denture F (denture 4a) of the first type manufactured in accordance with the present invention for which the silver ion coating processing has been done (microwave irradiation time 30 seconds) are provided for the test samples and the controlled trial had been conducted.

Each text sample piece is immersed into the 50 °C pure water for 16 hours by following the standard of the water proof examination level 2 (the antimicrobial product technology conference 2003 year edition) in advance. According to the antimicrobial processed product / the antimicrobial test method / antimicrobial properties written in the JISZ2801:2000 (ISO22196 compliant), the candida albicans IFO1594 (candida albicans) pre-cultivated by the standard agar is dispersed in the 1/500 nutrient broth, and 0.4 ml of the inoculums of candida albicans is inoculated to the 5 cm square sample for which waterproof processing has been done, 4 cm square polypropylene film is put onto the sample and cultivation is conducted for 24 hours at 35 °C. After the cultivation, bacteria in each sample are washed out with 10 ml of SCDLP, then 1 ml of SCDLP is collected and serial 10 fold dilutions were performed, and the number of the viable candida albicans in each test sample is measured by the standard agar plate culture method.

### (Experiment result)

The result of the measurement of the evaluation is shown in Fig.7. The viable cell detectable value after cultivation is 10cfu.

### (Considering and analysis of the result of the evaluation 1)

The number of the candida albicans just after inoculums is 5.1 × 10⁶ cfu as shown in the result of the test sample A. In case of the conventional denture made from polypropylene material or acrylic resin material, the number of the candida albicans is not decreased at all as shown in the result of the test sample B (5.2 × 10⁶ cfu) and C (5.4 × 10⁶ cfu), and therefore the conventional denture made from such material does not have the antimicrobial properties.

Regarding 3 patterns of the test sample pieces of denture 4a (the sample D : microwave irradiation 10 seconds, the sample E : microwave irradiation 20 seconds, the sample F : microwave irradiation 30 seconds) manufactured in accordance with the present invention, the number of the candida albicans is 0 cfu, and therefore the excellent antimicrobial properties of the denture processed by the present invention method are verified.

As shown above, the excellent antimicrobial properties of the denture 4a processed by the silver ion coating process of the present invention are verified.

As shown in the evaluation 1, according to the experiment of the mold evaluation by using the candida albicans for the processed denture processed by the silver ion coating process of the present invention, the excellent improvement of the antimicrobial properties are verified.

### (Evaluation 2)

### The test on the capable of the antimicrobial of the silver ion coated object of the first type manufactured in accordance with the present invention

The evaluation 2 is also the experiment showing the antimicrobial properties of the silver ion coated object of the first type manufactured in accordance with the present invention. In the evaluation 1, the antimicrobial properties is verified by using the candida albicans, however in this evaluation 2, the yellow staphylococcus aureus and the bacillus coli are used. The yellow staphylococcus aureus and the bacillus coli are regarded as main causative microorganisms of the aggravation in the condition of the denture users such as the paradentosis and the diarrhea. The inventor Ukegawa who is a professional dental technician considers that the experiment of the antimicrobial properties by using the yellow staphylococcus aureus and the bacillus coli is important for verifying the antimicrobial properties and bactericide useful for the restoration object for body deficiency and the inventor Ukegawa conducted the experiment of the antimicrobial properties evaluation by using the yellow staphylococcus aureus and the bacillus coli.

### In order to secure the objectivity of the test, the test is conducted by the Japan Synthetic Textile Inspection Institute Foundation

### (Test method of the evaluation 2)

The polypropylene film A of an inoculums just after inoculating the candida albicans as the controlled trial, the polypropylene film B of an inoculums 24 hours after inoculating the candida albicans, and the denture C (denture 4a) of the first type manufactured in accordance with the present invention for which the silver ion coating processing has been processed (microwave irradiation time 30 seconds) are provided for the test samples and the controlled trial had been conducted.

Two sets of test samples processed by the following preliminary treatment are provided.

The first test samples are immersed into the 50 °C pure water for 16 hours by the standard of the water proof treatment level 2 (the antimicrobial product technology conference 2003 year edition) in advance. This is a preliminary treatment for proving adaptation to the products that have much opportunity for touching water.

The second test samples are irradiated with the sunshine carbon arc lamp for 8 hours according to the standard of the sun proof treatment level 1 (the antimicrobial product technology conference 2003 year edition) in advance. This is a preliminary treatment for proving adaptation to the products that have less opportunity for receiving sunshine.

Next, these test samples processed by the 2 types of the preliminary treatment, according to the antimicrobial processed product / the antimicrobial test method / antimicrobial properties written in the JISZ2801:2000 (ISO22196 compliant), stapaylococcus aureus NBRC12732 and the Escherichia coli NBRC3972 that ware pre-cultivated by the standard agar are dispersed in the 1/500 nutrient broth, and 0.4 ml of the inoculums of those are inoculated to the 5 cm square sample for which waterproof processing has been processed, 4 cm square polypropylene film is put onto the sample and cultivation is conducted for 24 hours at 35 °C. After the cultivation, bacteria in each sample is washed out by 10 ml of SCDLP, then 1 ml of SCDLP is collected and serial 10 fold dilutions were performed, the number of the viable cells in each test sample is measured by the standard agar plate culture method.

### (Experiment result)

The result of the measurement of the evaluation 2 is shown in Fig.8. The viable cell detectable value after cultivation is 10cfu.

### (Considering and analysis of the result of the evaluation 1)

### Regarding the yellow staphylococcus aureus

The following conclusion is obtained by the test pieces which were processed by the preliminary water proof treatment 2.

The number of the yellow staphylococcus aureus just after inoculums is 3.8 × 10⁵ cfu as shown in the result of the test sample A. In the case of the conventional denture made from polypropylene material, the number of the yellow staphylococcus aureus is not decreased at all as shown in the result of the test sample B (5.4 × 10⁵ cfu), therefore the conventional denture made from such material does not have the antimicrobial properties.

However for the test sample piece C of the denture 4a manufactured in accordance with the present invention, the number of the yellow staphylococcus aureus is less than 10 cfu, and therefore the excellent antimicrobial properties of the denture processed by the present invention method is verified. As for the antibacterial activity value, the excellent result of more than 4.7 was seen.

The following conclusion is obtained from the test pieces that were processed by the preliminary sun proof treatment 1.

The number of the yellow staphylococcus aureus just after inoculums is 3.0 × 10⁵ cfu as shown in the result of the test sample A. In case of the conventional denture made from polypropylene material, the number of the yellow staphylococcus aureus is not decreased at all as shown in the result of the test sample B (1.3 × 10⁵ cfu), therefore the conventional denture made from such material does not have the antimicrobial properties.

However for the test sample piece C of the denture 4a manufactured in accordance with the present invention, the number of the yellow staphylococcus aureus is less than 10 cfu, therefore the excellent antimicrobial properties of the denture processed by the present invention method is verified. As for the antibacterial activity value, the excellent result of more than 5.1 was seen.

### Regarding bacillus coli

The following conclusion is obtained by the test pieces processed by the preliminary water proof treatment 2.

The number of the bacillus coli just after inoculums is 2.9 × 10⁵ cfu as shown in the result of the test sample A. In the case of the conventional denture made from polypropylene material, the number of the bacillus coli is not decreased at all as shown in the result of the test sample B (5.8 × 10⁶ cfu), therefore the conventional denture made from such material does not have the antimicrobial properties.

However for the test sample piece C of the denture 4a manufactured in accordance with the present invention, the number of the bacillus coli is less than 10 cfu, therefore the excellent antimicrobial properties of the denture processed by the present invention method is verified. As for the antibacterial activity value, the excellent result of more than 5.7 was seen.

The following conclusion is obtained by the test pieces processed by the preliminary sun proof treatment 1.

The number of the bacillus coli just after inoculums is 2.7 × 10⁵ cfu as shown in the result of the test sample A. In the case of the conventional denture made from polypropylene material, the number of the bacillus coli is not decreased at all as shown in the result of the test sample B (8.7 × 10⁶ cfu), and therefore the conventional denture made from such material does not have the antimicrobial properties.

However for the test sample piece C of the denture 4a manufactured in accordance with the present invention, the number of the bacillus coli is less than 10 cfu, therefore the cellent antimicrobial properties of the denture processed by the present invention method is verified. As for the antibacterial activity value, the excellent result of more than 5.9 was seen.

As shown above, the excellent antimicrobial properties of the denture 4a processed by the silver ion coating process of the present invention is verified.

As shown in the evaluation 2, for the processed denture processed by the silver ion coating process of the present invention, the excellent improvement of the antimicrobial properties is verified.

### (Evaluation 3)

### The test on the capable of the duration of the antimicrobial properties of the silver ion coated object of the first type manufactured in accordance with the present invention

The evaluation 3 is the experiment proofing the duration of the capable of the antimicrobial of the silver ion coated object of the first type manufactured in accordance with the present invention.

The silver ion coated object of the first type manufactured in accordance with the present invention is prepared by immersing the target object into the silver ion solution and then coating the silver ion onto the surface of the object by microwave irradiation.

In order to secure the objectivity of the test, the test is conducted by the Technology Research Institute of Osaka Prefecture (test no.02-02806).

### (Test method of the evaluation 3)

The polypropylene film G of a inoculums just after inoculating the candida albicans as the controlled trial, the polypropylene film H of an inoculums 3 months after inoculating the candida albicans, the acrylic resin I for the dental plate which the antimicrobial spraying is processed, and the denture J (denture 4a) of the first type manufactured in accordance with the present invention which the silver ion coating processing has been processed (microwave irradiation time 30 seconds) are provided for the test samples and the controlled trial had been conducted.

Each text sample piece is processed according to the antimicrobial processed product / the antimicrobial test method / antimicrobial properties written in the JISZ2801:2000 (ISO22196 compliant), the candida albicans IFO1594 (candida albicans) that was pre-cultivated by the standard agar is dispersed in the 1/500 nutrient broth, and 0.4 ml of the inoculums of candida albicans is inoculated to the 5 cm square sample which waterproof processing has been processed, 4 cm square polypropylene film is put onto the sample and cultivation is conducted for 3 months at 35 °C. After the cultivation, bacteria in each sample is washed by 10 ml of SCDLP, then 1 ml of SCDLP is collected and serial 10 fold dilutions were performed, the number of the viable candida albicans in each test sample is measured by the standard agar plate culture method.

### (Experiment result)

The result of the measurement of the evaluation is shown in Fig.9. The viable cell detectable value after cultivation is 10cfu.

### (Considering and analysis of the result of the evaluation 3)

The number of the candida albicans just after inoculums is 1.5 × 10⁷ cfu as shown in the result of the test sample G. In case of the conventional denture made from acrylic resin material, the number of the candida albicans after 3 months later is 1.1 × 10⁷ cfu as shown in the result of the test sample H, therefore the candida albicans is not decreased at all. Even if the test sample I which applied the antimicrobial spray available in the market, the antimicrobial properties don't last and the candida albicans has multiplied to 4.9 × 10⁶ cfu. Therefore the conventional antimicrobial spray does not maintain the antimicrobial properties during 3 months.

Regarding the test sample pieces of denture 4a (the sample J : microwave irradiation 30 seconds) manufactured in accordance with the present invention, the number of the candida albicans is 0 cfu 3 months later, and therefore the excellent duration of the antimicrobial properties of the denture processed by the present invention method is verified.

As shown above, the excellent duration of the antimicrobial properties of the denture 4a processed by the silver ion coating process of the present invention is verified.

As shown in the evaluation 3, for the processed denture processed by the silver ion coating process of the present invention, the excellent improvement of the duration of the antimicrobial properties is verified.

In the above shown experiment, the evaluation for the silver ion coated object of the second type manufactured in accordance with the present invention is not explained, however the silver ion coated object of the second type manufactured in accordance with the present invention is different from that of the first type of the present invention only in the silver ion solution providing method. On one hand, the object being immersed in the silver solution in the first type of the present invention, and on the other hand, the silver solution is sprayed to the object in the second type of the present invention. Therefore, the duration of the antimicrobial properties of the silver ion coated object of the second type manufactured in accordance with the present invention is verified by the above evaluation 1 and the above evaluation 3.

### (Evaluation 4)

### The test on the capable of the duration of the antimicrobial properties of the silver ion coated object of the fourth type manufactured in accordance with the present invention

The evaluation 4 is the experiment showing the duration of the capable of the antimicrobial of the silver ion coated object of the third type manufactured in accordance with the present invention.

The evaluation 4 is the experiment showing the antimicrobial properties of the silver ion coated object of the third type manufactured in accordance with the present invention. The silver ion coated object of the third type manufactured in accordance with the present invention is prepared by processing the plasma ion coat on the target object and immersing the plasma ion coated target object into the silver ion solution and coating the silver ion onto the surface of the target object by microwave irradiation. It is shown that the antimicrobial properties are not obtained simply by the plasma ion coating, however, the antimicrobial properties are obtained by the plasma ion coating followed by the silver ion coating of the present invention.

In order to secure the objectivity of the test, the test is conducted by the Technology Research Institute of Osaka Prefecture (test no.02-04221).

### (Test method of the evaluation 4)

The polypropylene film K of an inoculums just after inoculating the candida albicans as the controlled trial, the polypropylene film L of an inoculums 24 hours after inoculating the candida albicans, the acrylic resin M for the dental plate for which the silver ion coating is not processed, the denture N (denture 3c') for which the DLC processing has been processed but the silver ion coating processing has not been processed, and the denture O (denture 4c) of the third type manufactured in accordance with the present invention for which the DLC processing and the silver ion coating processing has been processed are provided for the test samples and the controlled trial had been conducted.

Each text sample piece is processed according to the antimicrobial processed product / the antimicrobial test method / antimicrobial properties written in the JISZ2801:2000 (ISO22196 compliant), the candida albicans IFO1594 (candida albicans) that was pre-cultivated by the standard agar is dispersed in the 1/500 nutrient broth, and 0.4 ml of the inoculums of candida albicans is inoculated to the 5 cm square sample for which waterproof processing has been done, 4 cm square polypropylene film is put onto the sample and cultivation is conducted for 24 hours at 35 °C. After the cultivation, bacteria in each sample is washed out by 10 ml of SCDLP, then 1 ml of SCDLP is collected and serial 10 fold dilutions were performed, the number of the viable candida albicans in each test sample is measured by the standard agar plate culture method.

### (Experiment result)

The result of the measurement of the evaluation is shown in Fig. 10. The viable cell detectable value after cultivation is 10cfu.

### (Considering and analysis of the result of the evaluation 4)

The number of the candida albicans just after inoculums is 3.7 × 10⁶ cfu as shown in the result of the test sample K. In the case of the conventional denture made from the polypropylene material or the acrylic resin material, the number of the candida albicans is not decreased at all as shown in the result of the test sample L (3.6 × 10⁶ cfu) and as shown in the result of the test sample M (1.9 × 10⁵ cfu)

In the same manner, in the case of the conventional denture processed by the plasma ion coating (DLC), the number of the candida albicans is not decreased at all as shown in the result of the test sample N (6.6 × 10⁵ cfu). While no evaluation is conducted, however, the test sample N obtains the wear resistance and the scratch resistance by the DLC processing as the conventional capable.

Regarding the test sample pieces of denture 4c (the sample O) manufactured in accordance with the present invention, the number of the candida albicans is 0 cfu, therefore the excellent antimicrobial properties of the denture processed by the plasma ion coating processing followed by the silver ion coating processing of the present invention method are verified.

As shown above, the excellent antimicrobial properties of the denture 4c processed by the plasma ion coating processing followed by the silver ion coating processing of the present invention method are verified.

As shown in the evaluation 4, the processed denture processed by the silver ion coating process of the present invention, the excellent improvement of the antimicrobial properties is verified.

In the above shown experiment, the evaluation for the silver ion coated object of the second type manufactured in accordance with the present invention is not explained, however the silver ion coated object of the second type manufactured in accordance with the present invention is different from that of the first type manufactured in accordance with the present invention only by the silver ion solution providing method. On one hand, the object is immersed in the silver solution in the first type of the present invention, on the other hand, the silver solution is sprayed to the object in the second type of the present invention. Therefore, the antimicrobial properties of the silver ion coated object of the second type manufactured in accordance with the present invention are verified by the above evaluation 4 and the above evaluation 4.

### (Embodiment 2)

The silver ion coated object manufactured in accordance with the present invention obtains the improvement of the performance in the bend strength and the bend strain of the processed polycarbonate and acrylic resin, which is the base of the target object, by the microwave irradiation for coating the silver ion. As shown above, the silver ion coated object of the third type manufactured in accordance with the present invention and the silver ion coated object of the fourth type manufactured in accordance with the present invention, the target object are coated by the plasma ion coating processing as the preliminary processing, therefore, the influence of the plasma ion coating on the bend strength and the bend strain is larger than that of the microwave irradiation of the present invention. Therefore, the influence on the bend strength and the bend strain by the microwave irradiation of the silver ion coating of the first type of the present invention and the second type of the present invention is verified in this embodiment.

In order to secure the objectivity of the test, the test is conducted by the Technology Research Institute of Osaka Prefecture (test no.02-03936).

The denture P (denture 4a) of the silver ion coated object of the first type manufactured in accordance with the present invention is provided for the test samples and the denture Q for which the silver ion coating is not done are provided for the controlled trial. The evaluation is conducted by the "Instron material testing apparatus" under the test temperature at 23 °C, the test humidity 50 %. The test method was JIS K7171 compliant, in which the cross head speed 1mm/min, and three point bending tests at the 48 mm distance between the points is conducted.

The plotted value of the measured bending stress and bending strain is shown in Fig.11. The values are summarized in Fig. 12.

The evaluation for the polycarbonate material is conducted. In order to secure the objectivity of the test, the test is conducted by the Technology Research Institute of Osaka Prefecture (test no.02-03937).

Four pieces of the denture R, S, T, U (denture 4a) made of the acrylic resin for the dental plate processed by the silver ion coating of the first type of the present invention are provided for the test samples and the bending test is conducted. In addition, the denture V (denture 3a) for which the silver ion coating is not done is provided for the controlled trial. The evaluation is conducted by the "Instron material testing apparatus" under the test temperature at 23 °C, the test humidity 50 %. The test method was based on JIS K7171 compliant, which the cross head speed 1mm/min, three point bending tests at the 48 mm distance between the points is conducted.

The plotted value of the measured bending stress and bending strain is shown in Fig.13. The values are summarized in Fig. 14.

It is apparent from the value shown in Fig.12 and Fig.14, the graph shown in Fig.11 and Fig.13 that the bending stress is improved and the bending strain is increased in the denture 4a processed by the microwave irradiation relative to the denture 3a processed by the microwave irradiation.

The denture selected as an example of the restoration object for restoring and repairing the body deficient portion is described by referring the drawings, but this configuration is only one example, and the configuration of the present invention can be modified in various designs.

### Industrial Applicability

This invention can be applied to the various objects can be a target object. For example, a silver-ion coated object such as a restoration object for body deficiency, a dental artificial restoration object, an artificial joint, an artificial bone, an auxiliary material for bone regeneration, a medical apparatus, a body mount object, a hospital facility goods, a nursing care supplies, baby goods, a toy, a household item, a machine, a tool and a container so on. The restoration object for body deficiency is a broad concept. For example, a denture, an artificial limb, an artificial arm, an artificial breast, a dental prosthesis and a maxillofacial prosthesis (a maxillary prosthesis, a splint, a craniofacial implant, an artificial eye, an artificial ear, an artificial nose, an artificial cheek) are included. The medical apparatus is a broad concept too. For example, a catheter, an endoscopy, a scalpel, a diagnostic apparatus, a contact lens, a glass and a hearing aid are included. The body mount object is a broad concept too. For example, sanitary goods, a mask, a mouthpiece, a mouth guard, underwear, a sandal, a sock, a cloth, a cap, a shoes, an insole, bedding, an ornament and an accessory are included. The hospital facility goods is a broad concept too. For example, the facility goods such as a sickroom, a bed, a sheet, a pillow, a sandal, a toilet and a bath are included. The nursing care supplies is a broad concept too. For example, a toilet, a urinal, a diaper, a bed, bedding, a gauze, a towel, a wheel chair, a cane, and various assistant tool and apparatus are included. The container is a broad concept too. For example, a drinking water container, a food container, a cosmetic container, a medicine container and a supplement container are included. The machine and tool are broad concept too. For example, a food processor machine, a electronic machine, a communication equipment, a handheld terminal equipment, business equipment, an office use tool, a car interior and equipment, a train fixture and equipment, an airplane fixture and equipment, a house fixture and equipment, a barbershop fixture and equipment, a cosmetic shop fixture and equipment (a scissor, a razor and so on), an elder care facility fixture and equipment and a nursing care fixture and equipment are included. The household item is a broad concept too. For example, an object used for a human body directly such as a tableware, a cooking implement (a kitchen knife, a chopping board and so on), a carpet, a curtain, a mask, a whisk, a toothbrush, bath equipment and a writing tool are included.

## Claims

1. A process for manufacturing a silver ion coated object having improved antimicrobial properties, comprising:
an irradiating process for irradiating microwaves to a target object immersed into a silver ion solution or to a target object in a sprayed state with a silver ion solution sprayed onto it, such that the silver ion solution is spread out onto the whole surface of the target object,
**characterized in that** the object stays immersed in or soaked with the silver ion solution during the microwave irradiation, and the object is dried after the microwave irradiation.

2. The process for manufacturing a silver ion coated object according to claim 1, wherein the irradiation time is in the range between 10 seconds to 30 seconds.

3. The process for manufacturing a silver ion coated object according to claim 1 or 2, wherein said object is a plasma ion coated object coated by a plasma ion coating processing.

## Patentansprüche

1. Verfahren zur Herstellung eines mit Silberionen beschichteten Gegenstands mit verbesserten antimikrobiellen Eigenschaften, umfassend:
ein Bestrahlungsverfahren zum Bestrahlen, mit Mikrowellen, eines in eine Silberionenlösung eingetauchten Zielgegenstands oder eines Zielgegenstands im gesprühten Zustand mit einer aufgesprühten Silberionenlösung, sodass die Silberionenlösung auf die gesamte Oberfläche des Zielgegenstands verteilt wird,
**dadurch gekennzeichnet, dass** der Gegenstand während der Mikrowellenbestrahlung in die Silberionenlösung eingetaucht oder mit dieser getränkt bleibt und der Gegenstand nach der Mikrowellenbestrahlung getrocknet wird.

2. Verfahren zur Herstellung eines mit Silberionen beschichteten Gegenstandes nach Anspruch 1, wobei die Bestrahlungszeit zwischen 10 Sekunden und 30 Sekunden liegt.

3. Verfahren zur Herstellung eines mit Silberionen beschichteten Gegenstandes nach Anspruch 1 oder 2, wobei der Gegenstand ein mit Plasmaionen beschichteter Gegenstand ist, der durch ein Plasmaionen-Beschichtungsverfahren beschichtet ist.

## Revendications

1. Procédé de fabrication d'un objet revêtu d'ions argent ayant des propriétés antimicrobiennes améliorées, comprenant :
un procédé d'irradiation pour irradier par micro-ondes un objet cible immergé dans une solution d'ions argent ou un objet cible à l'état pulvérisé avec une solution d'ions argent pulvérisée sur lui, de telle sorte que la solution d'ions argent soit étalée sur toute la surface de l'objet cible,
**caractérisé en ce que** l'objet reste immergé dans ou imbibé de la solution d'ions argent pendant l'irradiation par micro-ondes, et que l'objet est séché après l'irradiation par micro-ondes.

2. Procédé de fabrication d'un objet revêtu d'ions argent selon la revendication 1, dans lequel le temps d'irradiation est compris entre 10 et 30 secondes.

3. Procédé de fabrication d'un objet revêtu d'ions argent selon la revendication 1 ou 2, dans lequel ledit objet est un objet revêtu d'ions plasma qui est revêtu par un procédé de revêtement d'ions plasma.
